# EUROPÄISCHE PATENTSCHRIFT

(11) **EP 3 996 879 B1**
(45) Veröffentlichungstag und Bekanntmachung des Hinweises auf die Patenterteilung: **27.03.2024**
(21) Anmeldenummer: 20742181.9
(22) Anmeldetag: 07.07.2020
(51) Int. Cl.: B25J 9/00

(54) **EXOSKELETT MIT EINEM PNEUMATISCHEN AKTOR**
EXOSKELETON HAVING A PNEUMATIC ACTUATOR
EXOSQUELETTE DOTÉ D'UN ACTIONNEUR PNEUMATIQUE

(30) Priorität: 12.07.2019 DE 102019119033
(43) Veröffentlichungstag der Anmeldung: 18.05.2022
(73) Patentinhaber: exoIQ GmbH, 21109 Hamburg (DE)
(72) Erfinder: WEIDNER, Robert, 29581 Gerdau (DE); OTTEN, Bernward, 20535 Hamburg (DE)
(74) Vertreter: Koplin, Moritz
(86) Internationale Anmeldenummer: PCT/EP2020/069151
(87) Internationale Veröffentlichungsnummer: WO 2021/008948

(56) Entgegenhaltungen:
- EP-A2- 2 942 162
- WO-A1-2016/134103
- DE-A1-102008 045 113
- DE-A1-102016 123 797
- US-A1- 2017 367 852

## Beschreibung

### Technisches Gebiet

Die vorliegende Erfindung bezieht sich auf ein Exoskelett mit einem pneumatischen Aktor.

### Stand der Technik

Exoskelette sind körpergetragene Unterstützungssysteme und können dazu eingesetzt werden, die Bewegungen eines Nutzers zu unterstützten, zu verstärken, zu stabilisieren oder zu erweitern. Insbesondere kann die Ausführung von Bewegungen und vor allem die Durchführung von Tätigkeiten in einer ergonomisch ungünstigen Körperhaltung unterstützt werden. Um dies zu ermöglichen, verfügen Exoskelette oftmals über eine mechanische Struktur mit seriell gekoppelten Elementen und mindestens einem Angriffspunkt am Körper, an dem eine Kraftübertragung zwischen dem Exoskelett und dem Körper des Nutzers stattfindet. In der Regel verfügt ein Exoskelett zudem über mindestens einen weiteren Angriffspunkt am Körper, an dem die am anderen Angriffspunkt aufgenommene Kraft wieder abgegeben wird. Auf diese Weise kann ein zum menschlichen Skelettsystem paralleler Kraftfluss aufgebaut werden, der es erlaubt die Belastung des menschlichen Muskelskelettsystems punktuell zu reduzieren.

Aus der EP 2 942 162 A1 ist eine Robotervorrichtung mit Beinen bekannt, welche mehrere Stützelemente umfasst, die zu einer Relativbewegung aneinander gekoppelt sind und mehrere Freiheitsgrade definieren, wobei wenigstens einer der mehreren Freiheitsgrade wenigstens einem Freiheitsgrad eines menschlichen Beins entspricht. Die Robotervorrichtung umfasst ferner einen doppelt wirkenden Stellantrieb, um eine Kraft oder ein Drehmoment auf die Stützelemente in dem wenigstens einen der mehreren Freiheitsgrade auszuüben, und einen Speichermechanismus für potentielle Energie, der dem wenigstens einen der mehreren Freiheitsgrade zugeordnet ist, der betriebsfähig ist, um potentielle Energie durch eine Relativbewegung der Stützelemente in dem wenigstens einen der mehreren Freiheitsgrade zu speichern und wenigstens einen Teil der gespeicherten potentiellen Energie als eine Ausgleichskraft oder ein -drehmoment an die Stützelemente bereitzustellen, um den Stellantrieb zu unterstützen, wobei der Speichermechanismus für potentielle Energie eine Luftfeder umfasst, die konfiguriert ist, um wahlweise als ein pneumatischer Stellantrieb und/oder als ein pneumatischer Dämpfer zu wirken, wobei die Luftfeder konfiguriert ist, um ein Variieren einer Federrate, einer Nulllage und/oder einer Vorspannung zu erleichtern, und wobei die Nulllage und die Federrate dynamisch variabel sind.

### Darstellung der Erfindung

Gemäß einem ersten Aspekt der vorliegenden Beschreibung, welcher dem Verständnis der Erfindung dient, umfasst ein Exoskelett ein erstes Exoskelett-Element, ein zweites Exoskelett-Element, einen ersten pneumatischen Aktor, welcher mit dem ersten Exoskelett-Element und dem zweiten Exoskelett-Element mechanisch verbunden ist, und eine Steuereinheit, welche eingerichtet ist, bei einer Steuerung des ersten pneumatischen Aktors zwischen einem ersten aktiven Unterstützungsmodus und einem ersten passiven Unterstützungsmodus, in dem der erste pneumatische Aktor nicht in die Umgebung entlüftet wird, umzuschalten, wobei die Steuereinheit ferner eingerichtet ist, von dem ersten passiven Unterstützungsmodus in den ersten aktiven Unterstützungsmodus umzuschalten, wenn sich ein im ersten passiven Unterstützungsmodus bereitstellbares Druckniveau von einem von der ausgeführten Bewegung oder einer eingenommenen Pose abhängigen Solldruckniveau um mehr als einen Schwellenwert entfernt, und eine Abgabe von Druckluft an die Umgebung oder eine Zufuhr von Druckluft von einer Druckluftquelle zum ersten pneumatischen Aktor zu bewirken.

Dabei ist unter dem Begriff "Exoskelett", wie er im Rahmen der vorliegenden Beschreibung und der Ansprüche verwendet wird, eine mechanische Struktur mit seriell gekoppelten Elementen zu verstehen, die zur Anbindung an einen Körper eines Nutzers eingerichtet ist. Ferner ist unter dem Begriff "Exoskelett-Element", wie er im Rahmen der vorliegenden Beschreibung und der Ansprüche verwendet wird, insbesondere ein starres Bauteil zu verstehen, das mit einem Rahmen des Exoskeletts oder einem anderen starren Bauteil gelenkig gekoppelt ist. Des Weiteren ist unter dem Begriff "Steuereinheit", wie er im Rahmen der vorliegenden Beschreibung und der Ansprüche verwendet wird, insbesondere eine elektronische Schaltung (bspw. ein Mikrocontroller oder ein Prozessor) zu verstehen, die bspw. von Sensoren Zustandssignale empfängt, aus den Zustandssignalen gemäß einer Logik Steuersignale ableitet und die Steuersignale an Aktoren (bspw. elektropneumatische Ventile, Kompressoren, etc.) überträgt.

Zudem ist unter dem Begriff "pneumatischer Aktor", wie er im Rahmen der vorliegenden Beschreibung und der Ansprüche verwendet wird, insbesondere ein Aktor zu verstehen, der eine Druckkammer aufweist, in der bspw. ein einseitig oder beidseitig beaufschlagbarer Zylinder gleitend gelagert ist, wobei durch Zufuhr von Druckluft in die Druckkammer(n) eine Verschiebung des Zylinders und somit eine Verrichtung mechanischer Arbeit bewirkt werden kann. Ferner ist unter dem Begriff "aktiver Unterstützungsmodus", wie er im Rahmen der vorliegenden Beschreibung und der Ansprüche verwendet wird, insbesondere ein Unterstützungsmodus zu verstehen, in dem Druckluft "verbraucht" wird, indem Druckluft aus der Druckkammer des pneumatischen Aktors an die Umgebung abgegeben wird. Zudem ist unter dem Begriff "passiver Unterstützungsmodus", wie er im Rahmen der vorliegenden Beschreibung und der Ansprüche verwendet wird, ein Unterstützungsmodus zu verstehen, in dem keine Druckluft "verbraucht" wird, d. h., dass die Druckluft zwar ggf. aus der Druckkammer des pneumatischen Aktors heraus fließt, aber nicht (unmittelbar) an die Umgebung abgegeben wird.

Ferner ist unter der Formulierung "Umschalten zwischen dem passiven und dem aktiven Unterstützungsmodus", wie sie im Rahmen der vorliegenden Beschreibung und der Ansprüche verwendet wird, insbesondere das Beenden des passiven Unterstützungsmodus und das Starten des aktiven Unterstützungsmodus bzw. das Beenden des aktiven Unterstützungsmodus und das Starten des passiven Unterstützungsmodus zu verstehen, so dass das Exoskelett in bestimmten Phasen, in denen der passive Unterstützungsmodus aktiv ist, keine Druckluft "verbraucht" und in anderen Phasen, in denen der aktive Unterstützungsmodus aktiv ist, Druckluft "verbraucht". Dabei versteht es sich, dass im aktiven Unterstützungsmodus eine größere Freiheit hinsichtlich der Anpassung der Unterstützungskraft an eine bestimmte Bewegung/Pose gegeben ist, als im passiven Unterstützungsmodus, in dem der pneumatische Aktor nicht in die Umgebung entlüftet wird.

Zudem ist unter dem Begriff "Druckniveau", wie er im Rahmen der vorliegenden Beschreibung und der Ansprüche verwendet wird, insbesondere ein Druckniveau in einer Druckkammer des pneumatischen Aktors zu verstehen. Ferner ist unter der Formulierung "wenn sich ein im passiven Unterstützungsmodus bereitstellbares Druckniveau von einem von der ausgeführten Bewegung oder einer eingenommenen Pose abhängigen Solldruckniveau um mehr als einen Schwellenwert entfernt", wie sie im Rahmen der vorliegenden Beschreibung und der Ansprüche verwendet wird, insbesondere ein Druckniveau zu verstehen, dass sich bei einer Bewegung des Exoskeletts ändert, da bspw. Luft in der Druckkammer komprimiert oder expandiert wird, wobei eine Zuführung von Luft und insbesondere ein Entlüftung in die Umgebung dann stattfindet, wenn der Benutzer einen bestimmten Bewegungsbereich verlässt und/oder sich die aufzuwenden Unterstützungskraft durch äußere Faktoren, wie bspw. die Aufnahme eines Gewichts, ändert.

Im passiven Unterstützungsmodus wird dem pneumatischen System keine Energie (in Form von Druckluft) entnommen. Vielmehr kann über energiespeichernde Elemente (Druckluft-Zwischenspeicher) bei bestimmten Bewegungen Energie aufgenommen und später wieder abgegeben werden. Beispielsweise kann bei einer Abwärtsbewegung der Arme oder des Oberköpers Energie in einer Gasdruckfeder gespeichert werden und beim Anheben der Arme oder des Körpers die gespeicherte Energie an den Körper wieder zurückgegeben werden. So wird der Nutzer entgegen der Gravitation bei repetitiven Tätigkeiten unterstützt und zudem seine Haltearbeit in statischen Situationen reduziert.

Im aktiven Unterstützungsmodus kann dem pneumatischen System von außen Energie (in Form von Druckluft) zugeführt werden. Durch die Steuereinheit kann die an einem Angriffspunkt zwischen dem Exoskelett und dem Körper wirkende Kraft (ggf. abhängig von einer Vielzahl an Parametern) gesteuert werden, indem einer Druckkammer Druckluft zugeführt oder Druckluft aus einer Druckkammer abgeleitet wird. Somit zeichnet sich der aktive Unterstützungsmodus (im Vergleich zum passiven Unterstützungsmodus) durch eine höhere Flexibilität in Bezug auf die Generierung einer für den Nutzer problemgerechten und an die Unterstützungssituation, bspw. hinsichtlich der durchzuführenden Tätigkeit (leichtes oder schweres Werkzeug, Objekt aufnehmen oder loslassen) oder der physiologischen Voraussetzung (Kraftkurven etc.), angepassten Unterstützungskraft aus. Dafür ist jedoch ein Energiekonzept erforderlich, in dem nicht nur (wie im passiven Unterstützungsmodus) die pneumatische Energie gespeichert wird, sondern darüber hinaus auch pneumatische Energie an die Umgebung abgegeben bzw. dem pneumatischen System zugeführt und der Energiefluss im pneumatischen System überwacht und geregelt wird.

Vorzugsweise ist die Steuereinheit eingerichtet, den ersten pneumatischen Aktor bei einem Umschalten in den ersten passiven Unterstützungsmodus mit einem ersten Druckluft-Zwischenspeicher zu verbinden.

Dadurch wird die Veränderung des Druckniveaus bei Bewegungen, die auf den ersten pneumatischen Aktor wirken, reduziert, was es vereinfachen kann, das Druckniveau in einem Toleranzbereich um das Solldruckniveau zu halten.

Vorzugsweise weist der erste Druckluft-Zwischenspeicher ein größeres Volumen auf, als eine Druckkammer des ersten pneumatischen Aktors.

Vorzugsweise umfasst das Exoskelett ferner ein drittes Exoskelett-Element, ein viertes Exoskelett-Element und einen zweiten pneumatischen Aktor, welcher mit dem dritten Exoskelett-Element und dem vierten Exoskelett-Element mechanisch verbunden ist, wobei die Steuereinheit ferner eingerichtet ist, bei einer Steuerung des zweiten pneumatischen Aktors zwischen einem zweiten aktiven Unterstützungsmodus und einem zweiten passiven Unterstützungsmodus, in dem der zweite pneumatische Aktor nicht in die Umgebung entlüftet wird, umzuschalten und die Steuereinheit ferner eingerichtet ist, von dem zweiten passiven Unterstützungsmodus in den zweiten aktiven Unterstützungsmodus umzuschalten, wenn sich ein im zweiten passiven Unterstützungsmodus bereitstellbares Druckniveau von einem von der ausgeführten Bewegung oder einer eingenommenen Pose abhängigen Solldruckniveau um mehr als einen Schwellenwert entfernt, und eine Abgabe von Druckluft an die Umgebung oder eine Zufuhr von Druckluft von einer Druckluftquelle zum zweiten pneumatischen Aktor zu bewirken.

In diesem Zusammenhang ist anzumerken, dass das Solldruckniveau, das von der ausgeführten Bewegung oder der eingenommenen Pose abhängt, für beide pneumatischen Aktoren gleich oder unterschiedlich sein kann. Bspw. kann das Solldruckniveau (zu einem bestimmten Zeitpunkt) für beide pneumatischen Aktoren gleich sein, wenn der zweite pneumatische Aktor "spiegelsymmetrisch" zum ersten pneumatischen Aktor eingebaut ist und der Benutzer eine Bewegung ausführt oder eine Pose einnimmt, die sich durch Spiegelsymmetrie zur Körpermittelachse auszeichnet. Jedoch kann das Solldruckniveau auch dann für beide pneumatischen Aktoren unterschiedlich sein, wenn der zweite pneumatische Aktor "spiegelsymmetrisch" zum ersten pneumatischen Aktor eingebaut ist und der Benutzer eine Bewegung ausführt oder eine Pose einnimmt, die sich durch Spiegelsymmetrie zur Körpermittelachse auszeichnet, wenn der Benutzer durch eine Verletzung, eine Verschleißerscheinung oder (stark) asymmetrisch entwickelte Muskulatur an einer Seite (wesentlich) mehr Unterstützungskraft benötigt, als auf der anderen Seite oder wenn eine Kraft von außen einseitig auf den Benutzer wirkt (z.B. die Gewichtskraft eines Gegenstandes).

Vorzugsweise ist die Steuereinheit eingerichtet, den zweiten pneumatischen Aktor bei einem Umschalten in den zweiten passiven Unterstützungsmodus mit einem zweiten Druckluft-Zwischenspeicher zu verbinden.

Vorzugsweise ist die Steuereinheit eingerichtet, in Abhängigkeit von den Druckniveaus und den Solldruckniveaus Druckluft vom ersten Druckluft-Zwischenspeicher in den zweiten Druckluft-Zwischenspeicher zu leiten und/oder Druckluft vom zweiten Druckluft-Zwischenspeicher in den ersten Druckluft-Zwischenspeicher zu leiten.

Somit kann ein Verbrauch von Druckluft reduziert werden, da Druckluft nicht an die Umgebung abgegeben, sondern in einem Druckluft-Zwischenspeicher-Netzwerk entsprechend der aktuellen (oder zukünftiger) Erfordernisse umgeleitet wird.

Vorzugsweise ist die Steuereinheit eingerichtet, in Abhängigkeit von den Druckniveaus und den Solldruckniveaus den ersten pneumatischen Aktor von dem ersten Druckluft-Zwischenspeicher zu trennen und mit dem zweiten Druckluft-Zwischenspeicher zu verbinden und/oder den zweiten pneumatischen Aktor von dem zweiten Druckluft-Zwischenspeicher zu trennen und mit dem ersten Druckluft-Zwischenspeicher zu verbinden.

Dies erlaubt eine weitere Reduktion des Verbrauchs von Druckluft, da Druckluft nicht an die Umgebung abgegeben, sondern von einem pneumatischen Aktor zu einem anderen pneumatischen Aktor übergeben werden kann.

Vorzugsweise ist die Steuereinheit eingerichtet, im aktiven Unterstützungsmodus ein elektropneumatisches Ventil zu steuern, über das dem ersten pneumatischen Aktor Druckluft zugeführt werden kann.

Bspw. kann die Druckkammer des ersten pneumatischen Aktors über das Ventil mit einer Druckluftquelle (die bspw. mittels eines Kompressors wiederaufgefüllt werden kann) verbunden sein, so dass beim Öffnen des Ventils Druckluft aus der Druckluftquelle in die Druckkammer strömt.

Vorzugsweise ist die Steuereinheit eingerichtet, eine im aktiven Unterstützungsmodus durch den ersten pneumatischen Aktor erbrachte erste Unterstützungskraft an die ausgeführte Bewegung anzupassen.

Vorzugsweise ist der erste pneumatische Aktor mit dem ersten Exoskelett-Element über eine nichtlineare mechanische Übersetzung verbunden.

Die nichtlineare mechanische Übersetzung kann bspw. derart ausgebildet sein, dass sich in der Umgebung einer Ruhelage (bspw. Arm unten) die vom Nutzer wahrgenommene Kraft bei konstantem Druckniveau des jeweiligen pneumatischen Aktors deutlich reduziert und so der Aktor mit einem verhältnismäßig konstantem Druckniveau über den gesamten Bewegungsbereich betrieben werden kann.

Gemäß einem zweiten Aspekt der vorliegenden Beschreibung, welcher dem Verständnis der Erfindung dient, umfasst ein Exoskelett ein erstes Exoskelett-Element, ein zweites Exoskelett-Element, eine Gasdruckfeder, welche mit dem ersten Exoskelett-Element und dem zweiten Exoskelett-Element verbunden und eingerichtet ist, bei einer durch die Schwerkraft unterstützten Bewegung Energie aufzunehmen und zu speichern und eine gegen die Schwerkraft erfolgende Bewegung durch Abgeben der gespeicherten Energie zu unterstützen, und eine Steuereinheit, welche eingerichtet ist, durch Erhöhen oder Verringern des Gasdrucks eine Veränderung des durch die Gasdruckfeder bereitgestellten Unterstützungsniveaus zu bewirken.

Vorzugsweise ist die Gasdruckfeder mit dem ersten Exoskelett-Element über eine nichtlineare mechanische Übersetzung verbunden.

Vorzugsweise ist das Unterstützungsniveau durch einen Benutzer des Exoskeletts über die Steuereinheit manuell einstellbar.

Ein erfindungsgemäßes Exoskelett umfasst eine Vielzahl an Exoskelett-Elementen, einen Kompressor, einen Druckluft-Vorratsbehälter, einen ersten pneumatischen Aktor, einen zweiten pneumatischen Aktor, ein Druckluft-Zwischenspeicher-Netzwerk mit mindestens zwei Druckluft-Zwischenspeichern, und eine Steuereinheit, wobei der Kompressor mit dem Druckluft-Vorratsbehälter verbunden und eingerichtet ist, den Druckluft-Vorratsbehälter mit Druckluft zu befüllen, die Steuereinheit eingerichtet ist, den Druck in den pneumatischen Aktoren und den Druckluft-Zwischenspeichern zu überwachen und wenn eine durch den ersten pneumatischen Aktor bereitgestellte erste Unterstützungskraft zu reduzieren ist, zu bestimmen, ob der erste pneumatische Aktor in die Umgebung oder in das Druckluft-Zwischenspeicher-Netzwerk zu entlüften ist, und, wenn eine durch den zweiten pneumatischen Aktor bereitgestellte zweite Unterstützungskraft zu erhöhen ist, zu bestimmen, ob dem zweiten pneumatischen Aktor Druckluft aus dem Druckluft-Vorratsbehälter und/oder aus dem Druckluft-Zwischenspeicher-Netzwerk zuzuführen ist.

Vorzugsweise ist die Steuereinheit eingerichtet, wenn eine erste Unterstützungskraft zu reduzieren und gleichzeitig die zweite Unterstützungskraft zu erhöhen ist, zu bewirken, dass Druckluft vom ersten pneumatischen Aktor über das Druckluft-Zwischenspeicher-Netzwerk dem zweiten pneumatischen Aktor zugeführt wird, wenn eine zu entlüftende Druckkammer des ersten pneumatischen Aktors unter größerem Druck steht, als eine zu speisende Druckkammer des zweiten pneumatischen Aktors.

### Kurze Beschreibung der Zeichnungen

Die Erfindung wird nachfolgend in der detaillierten Beschreibung anhand von Ausführungsbeispielen erläutert, wobei auf Zeichnungen Bezug genommen wird, in denen:
Fig. 1 den Aufbau eines beispielhaften Exoskeletts zeigt;
Fig. 2 und Fig. 2a das Umschalten zwischen dem aktiven und dem passiven Unterstützungsmodul illustrieren;
Fig. 3 und Fig. 3a den Einsatz eines Druckluft-Zwischenspeichers illustrieren;
Fig. 4, Fig. 4a, Fig. 5 und Fig. 5a den erfindungsgemäßen Einsatz eines Druckluft-Zwischenspeicher-Netzwerks illustrieren; und
Fig. 6 ein Ablaufdiagramm bei einer Verwendung des Druckluft-Zwischenspeicher-Netzwerks zeigt.

Dabei sind in den Zeichnungen gleiche oder funktional ähnliche Elemente durch gleiche Bezugszeichen gekennzeichnet.

### Wege zur Ausführung der Erfindung

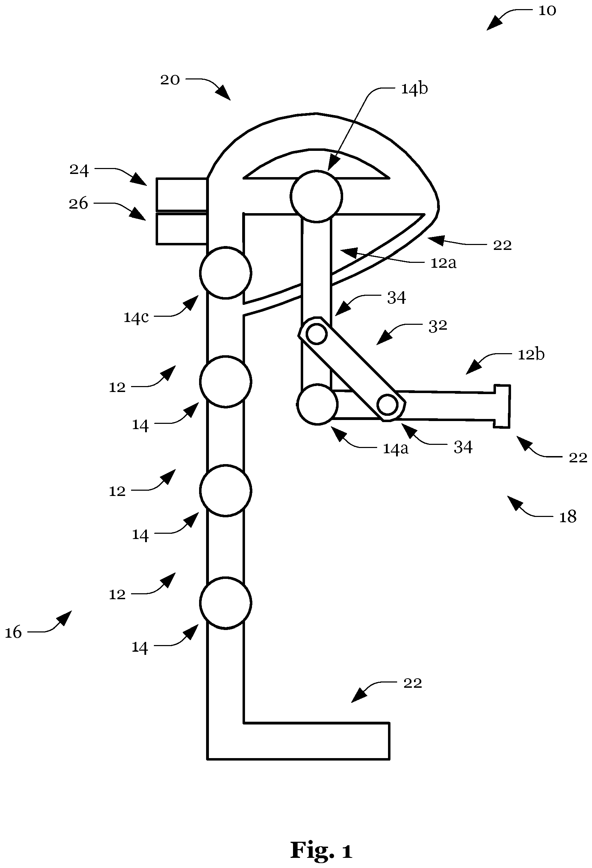

Fig. 1 zeigt ein Exoskelett 10, welches eine Vielzahl von rigiden Exoskelett-Elementen 12 umfasst, die durch Verbindungselemente, wie z. B. Gelenke 14, miteinander seriell gekoppelt sind. Das Exoskelett 10 ist in mehrere Abschnitte unterteilt, wobei jeder Abschnitt hinsichtlich der erlaubten/geführten Bewegungen der den jeweiligen Abschnitt bildenden Exoskelett-Elemente 12, 12a, 12b relativ zueinander den entsprechenden Abschnitten des menschlichen Körpers nachempfunden ist. So ist das in Fig. 1 gezeigte Exoskelett 10 in einen Basis-Abschnitt 16 und einen Arm-Abschnitt 18 untergliedert, welche durch einen Schulter-Abschnitt 20 miteinander verbunden sind. Obwohl in Fig. 1 nicht gezeigt, kann das Exoskelett 10 zudem einen Bein-Abschnitt aufweisen. Ferner versteht es sich, dass ein erfindungsgemäßes Exoskelett 10 auch nur einen oder einige der beschriebenen Abschnitte aufweisen kann und das in Fig. 1 gezeigte Exoskelett 10 somit nur als ein Beispiel für ein Exoskelett 10 aufzufassen ist.

Zur Anbindung des Exoskeletts 10 an den menschlichen Körper umfassen der Basis-Abschnitt 16, der Arm-Abschnitt 18 und der Schulter-Abschnitt 20 jeweils ein oder mehrere rigide oder flexible Anbindungselemente 22 (bspw. Gurte), die bei Benutzung im Hüft-/Schambeinbereich bzw. am Arm-/Schulter-/Brustbereich des Benutzers anliegen bzw. diesen (teilweise) umgreifen oder umschließen. Die Position bzw. der Umfang besagter Anbindungselemente 22 kann einstellbar sein, um das Exoskelett 10 an unterschiedliche Nutzer anpassen zu können.

Die Exoskelett-Elemente 12 des Basis-Abschnitts 16 sind hinsichtlich der erlaubten/geführten Bewegungen der den Basis-Abschnitt 16 bildenden Exoskelett-Elemente 12 relativ zueinander den Wirbeln einer menschlichen Wirbelsäule nachempfunden. Der Basis-Abschnitt 16 umfasst dazu seriell gekoppelte Exoskelett-Elemente 12, wobei jeweils zwei Exoskelett-Elemente 12 über ein Gelenk 14 miteinander gekoppelt sind, wobei das Gelenk 14 eingerichtet ist, eine Relativbewegung der Exoskelett-Element 12 zu ermöglichen (oder zu erzwingen), die der Bewegung eines oder mehrerer entsprechender Wirbel der Wirbelsäule eines Benutzers entspricht. Das Exoskelett 12 kann ferner einen oder mehrere Sensoren zum Bestimmen der Position und/oder Ausrichtung der Exoskelett-Elemente 12 des Basis-Abschnitts 16 (relativ zueinander und/oder zu einem bestimmten erd- oder körperfesten Koordinatensystem) umfassen.

Die Exoskelett-Elemente 12a, 12b des Arm-Abschnitts 18 sind hinsichtlich der erlaubten/geführten Bewegungen der den Arm-Abschnitt 18 bildenden Exoskelett-Elemente 12 relativ zueinander dem Oberarmknochen und dem Unterarmknochen des menschlichen Skeletts nachempfunden. Der Arm-Abschnitt 18 umfasst dazu ein erstes Exoskelett-Element 12a, welches über ein erstes Gelenk 14a mit einem zweiten Exoskelett-Element 12b gekoppelt ist. Das erste Exoskelett-Element 12a ist zudem über ein zweites Gelenk 14b mit dem Schulter-Abschnitt 20 gekoppelt, der seinerseits über ein drittes Gelenk 14c mit einem Exoskelett-Element 12 des Basis-Abschnitts 16 gekoppelt ist. Das Exoskelett 12 kann ferner einen oder mehrere Sensoren zum Bestimmen der Position und/oder Ausrichtung der Exoskelett-Elemente 12a, 12b des Arm-Abschnitts 18 (relativ zueinander und/oder zu einem bestimmten erd- oder körperfesten Koordinatensystem) umfassen.

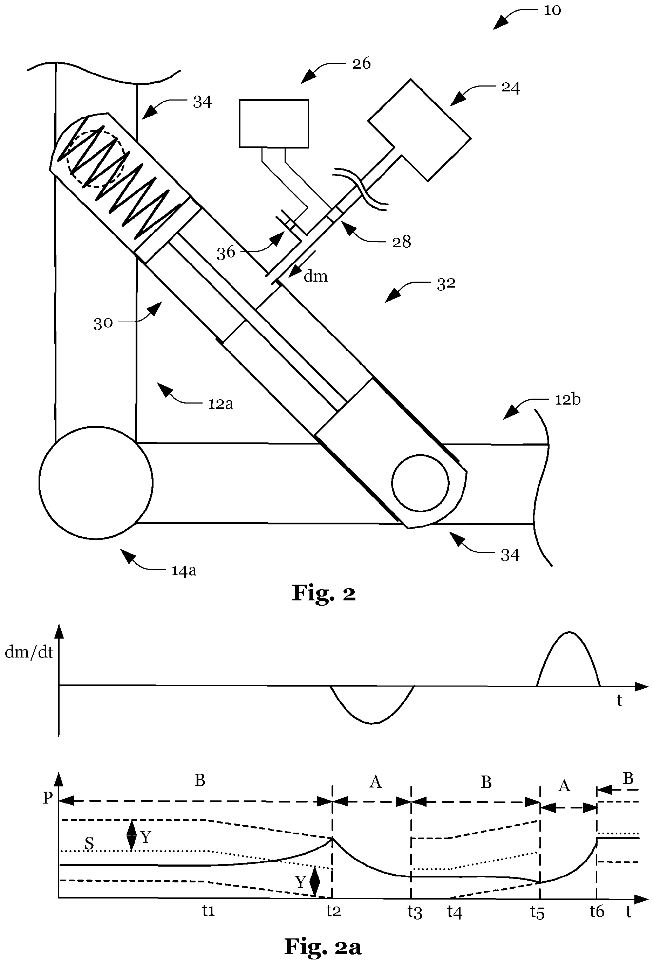

Das Exoskelett 10 umfasst zudem eine Druckluftquelle 24 (bspw. einen Kompressor oder einen Druckluft-Vorratsbehälter, der ggf. durch einen Kompressor während des Betriebs wieder aufgefüllt werden kann) und eine Steuereinheit 26. Wie in Fig. 2 schematisch illustriert, kann die Steuereinheit 26 durch Steuern eines ersten Ventils 28 bewirken, dass Druckluft (bzw. ein Volumenstrom dm/dt), die von der Druckluftquelle 24 bereitgestellt wird, in die Druckkammer 30 eines ersten pneumatischen Aktors 32 geleitet wird. Da der erste pneumatischer Aktor 32 mit dem ersten Exoskelett-Element 12a und dem zweiten Exoskelett-Element 12b (über zwei Gelenke 34) mechanisch verbunden ist, kann durch das Zuführen von Druckluft durch das erste Ventil 28 oder durch das Entlüften der Druckkammer 30 durch das zweite Ventil 36 eine das Armbeugen unterstützende Kraft erhöht bzw. reduziert werden. Dabei ist die Steuereinheit 26 eingerichtet, bei der Steuerung des ersten pneumatischen Aktors 32 zwischen einem ersten aktiven Unterstützungsmodus A und einem ersten passiven Unterstützungsmodus B, in dem der erste pneumatische Aktor 28 nicht in die Umgebung entlüftet wird, umzuschalten.

Die Steuereinheit 26 misst dazu das Druckniveau P und schaltet von dem passiven Unterstützungsmodus B in den aktiven Unterstützungsmodus A, wenn sich das im passiven Unterstützungsmodus B bereitstellbare Druckniveau P von dem von der ausgeführten Bewegung oder der eingenommenen Pose abhängigen Solldruckniveau S um mehr als einen Schwellenwert Y entfernt. So arbeitet die Steuereinheit 26 in dem in Fig. 2a beispielhaft gezeigten Druckniveauverlauf anfangs im passiven Unterstützungsmodus B, in dem das Solldruckniveau S abhängig von der ausgeführten Bewegung oder der eingenommenen Pose ermittelt wird. Nachdem der Benutzer anfangs in einer Pose verharrt, beginnt der Benutzer bei t1 sich zu bewegen, indem er bspw. seinen Unterarm absenkt. Durch das Absenken des Unterarms reduziert sich das Solldruckniveau S, wohingegen der Druck P in der Druckkammer 30 steigt, da die in der Druckkammer 30 befindliche Luft komprimiert wird.

Da das bereitstellbare Druckniveau P von dem von der ausgeführten Bewegung oder der eingenommenen Pose abhängigen Solldruckniveau S zum Zeitpunkt t2 um mehr als den Schwellenwert Y entfernt ist, schaltet die Steuereinheit 26 in den aktiven Unterstützungsmodus A um. Im aktiven Unterstützungsmodus A wird Druckluft durch das zweite Ventil 36 an die Umgebung abgegeben, wodurch sich das Druckniveau P in der Druckkammer 30 reduziert. Zum Zeitpunkt t3 schaltet die Steuereinheit 26 wieder in den passiven Unterstützungsmodus A um. Wenn der Benutzer zum Zeitpunkt t4 beginnt, den Unterarm anzuheben, steigt das Solldruckniveau S, wohingegen der Druck P in der Druckkammer 30 sinkt, da die in der Druckkammer 30 befindliche Luft expandiert. Da das Druckniveau P zum Zeitpunkt t5 um mehr als den Schwellenwert Y von dem Solldruckniveau S entfernt ist, schaltet die Steuereinheit 26 wieder in den aktiven Unterstützungsmodus A um und leitet Druckluft von der Druckluftquelle 24 durch das erste Ventil 28 in die Druckkammer 30 des ersten pneumatischen Aktors. Zum Zeitpunkt t6 schaltet die Steuereinheit 26 wieder in den passiven Unterstützungsmodus Bum.

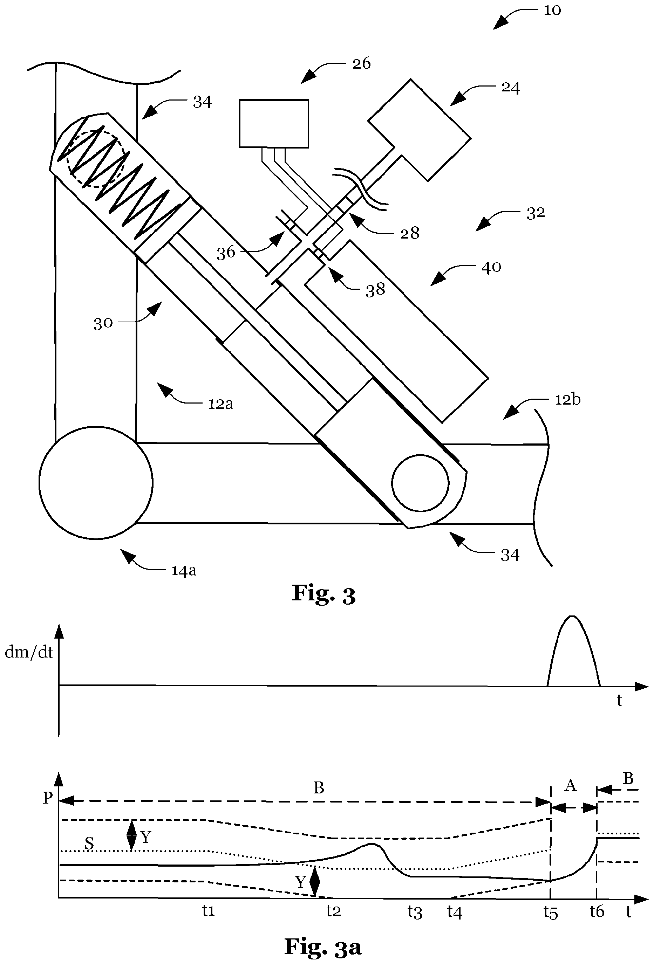

Wie in Fig. 3 und Fig. 3a gezeigt, kann die Druckkammer 30 des ersten pneumatischen Aktors 32 im passiven Unterstützungsmodus B über ein drittes Ventil 38 mit einem ersten Druckluft-Zwischenspeicher 40 verbunden werden, wodurch sich das Druckniveau P bei Bewegungen des Benutzers weniger stark ändert und die Häufigkeit des Umschaltens in den aktiven Unterstützungsmodus A und/oder die Dauer der Phasen, in denen der aktive Unterstützungsmodus aktiv ist, reduziert werden kann. Ferner kann der Bewegungsbereich durch Vorsehen einer nichtlinearen mechanischen Übersetzung vergrößert werden, indem die nichtlineare mechanische Übersetzung dafür sorgt, dass sich die auf den Benutzer wirkende Unterstützungskraft bei Bewegungen des Benutzers (prozentual) weniger stark ändert, als das Druckniveau. Im passiven Unterstützungsmodus B wird der erste pneumatische Aktor 32 als Gasdruckfeder betrieben, wobei die Federkonstante durch Verbinden der Druckkammer 30 mit dem Druckluft-Zwischenspeichern 40 aber auch durch eine vorübergehende Aktivierung des aktiven Unterstützungsmodus A angepasst werden kann.

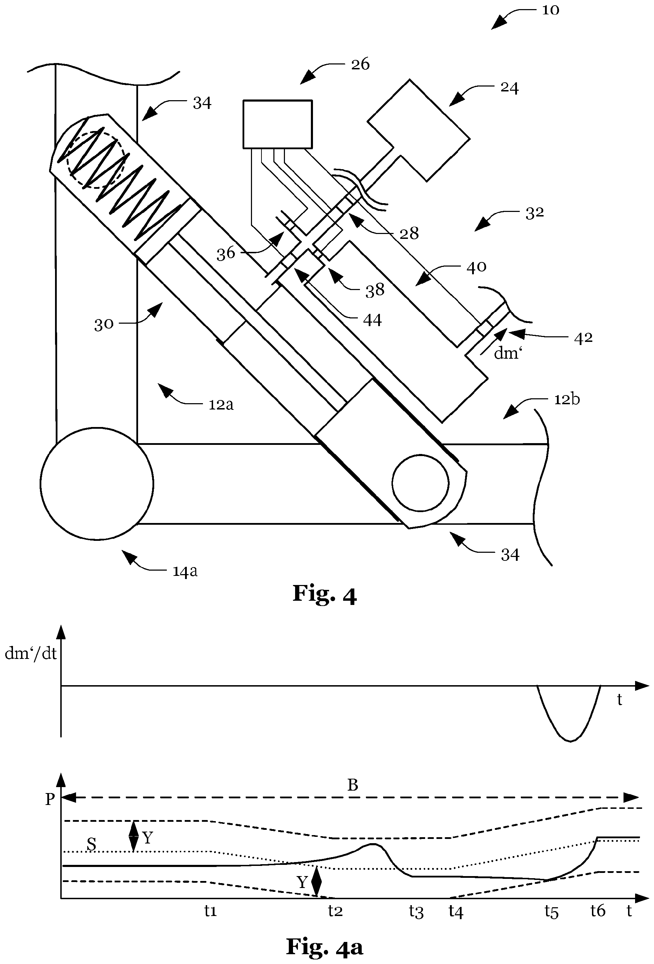

Wie in Fig. 4 und Fig. 4a gezeigt, ist in erfindungsgemäßer Art der erste Druckluft-Zwischenspeicher 40 über ein viertes Ventil 42 mit einem zweiten Druckluft-Zwischenspeicher (nicht gezeigt) oder eine Druckkammer eines zweiten pneumatischen Aktors (nicht gezeigt) verbunden, wodurch anstatt des Umschaltens in den aktiven Unterstützungsmodus A bereits eingesetzte Druckluft umgeleitet bzw. wiederverwertet werden kann. Zudem kann in dieser Konfiguration ein fünftes Ventil 44 vorgesehen sein, das es ermöglicht, den ersten Druckluft-Zwischenspeicher 40 unabhängig von der Druckkammer 30 zu entlüften.

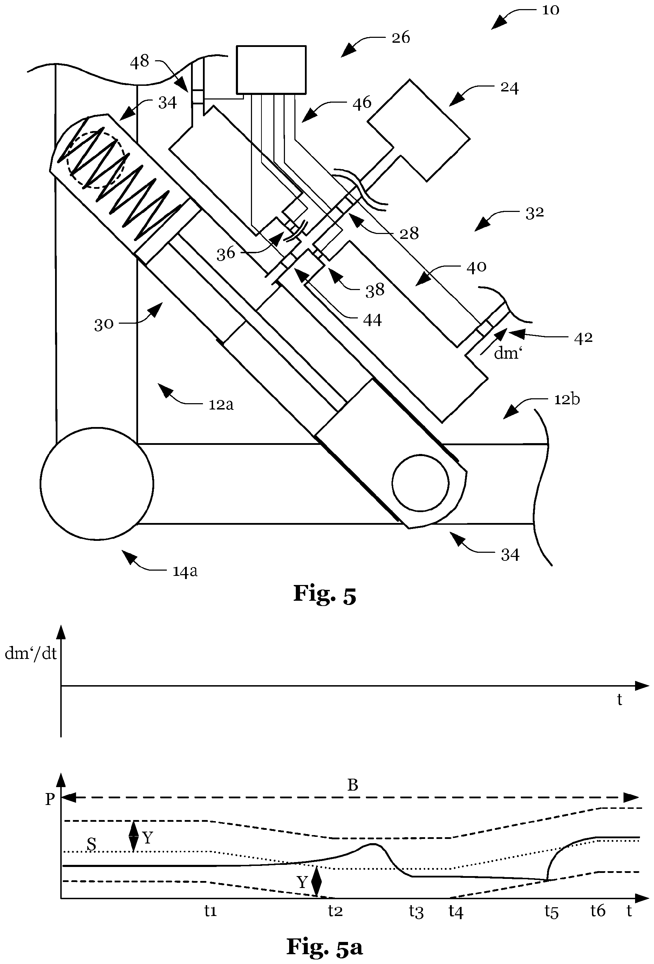

Ferner kann, wie in Fig. 5 und Fig. 5a gezeigt, eine Anordnung an Druckluft-Zwischenspeichern 40, 46 und Ventilen 28, 26, 38, 42, 44, 48 vorgesehen sein, die es erlaubt verschiedene Druckluft-Zwischenspeicher 40, 46 mit einer Druckkammer 30 zu verbinden. Bspw. kann zum Zeitpunkt t5 das dritte Ventil 38 geschlossen und das zweite Ventil 36 geöffnet werden, wenn der zweite Druckluft-Zwischenspeicher 46 einen höheren Druck aufweist als der erste Druckluft-Zwischenspeicher 40.

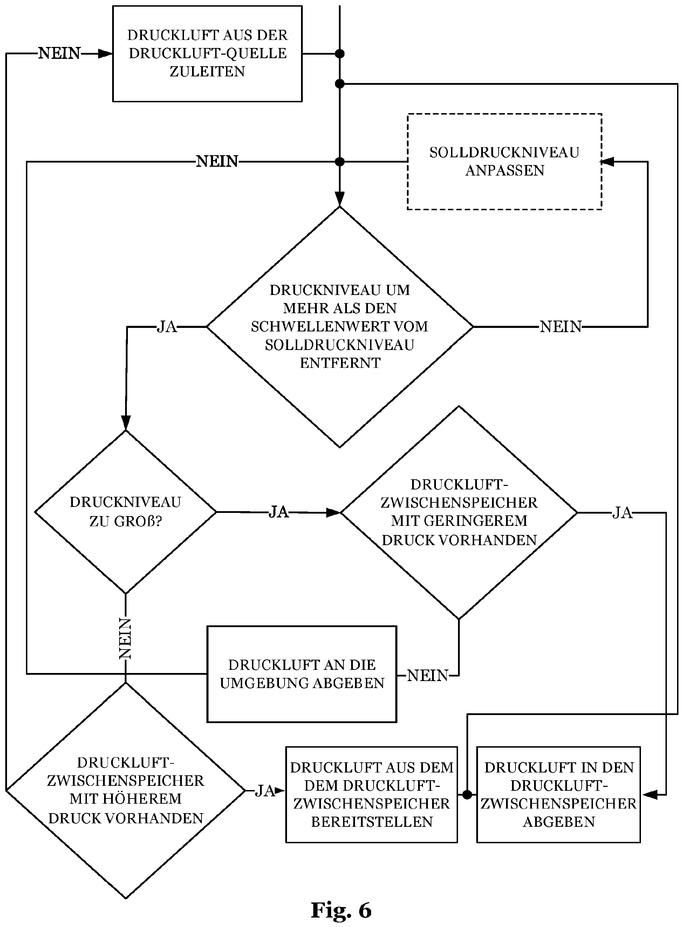

Fig. 6 zeigt dazu ein Ablaufdiagramm, bei dem, wenn das Druckniveau P um mehr als den Schwellenwert Y von dem Solldruckniveau S entfernt ist, entschieden wird, ob die Druckkammer 30 in einen Druckluft-Zwischenspeicher 40, 46 oder in die Umgebung entlüftet wird bzw. ob Druckluft aus einem Druckluft-Zwischenspeicher 40, 46 oder der Druckluftquelle 24 bereitgestellt wird.

### Liste der Bezugszeichen

- 10: Exoskelett
- 12: Exoskelett-Element
- 12a: Exoskelett-Element
- 12b: Exoskelett-Element
- 14: Gelenk
- 14a: Gelenk
- 14b: Gelenk
- 14c: Gelenk
- 16: Basis-Abschnitt
- 18: Arm-Abschnitt
- 20: Schulter-Abschnitt
- 22: Anbindungselement
- 24: Druckluftquelle
- 26: Steuereinheit
- 28: Ventils
- 30: Druckkammer
- 32: pneumatischer Aktor
- 34: Gelenk
- 36: Ventil
- 38: Ventil
- 40: Druckluft-Zwischenspeicher
- 42: Ventil
- 44: Ventil
- 46: Druckluft-Zwischenspeicher
- 48: Ventil

## Patentansprüche

1. Exoskelett (10), umfassend;
eine Vielzahl an Exoskelett-Elementen (12, 12a, 12b);
einen Kompressor;
einen Druckluft-Vorratsbehälter;
einen ersten pneumatischen Aktor (32);
einen zweiten pneumatischen Aktor;
ein Druckluft-Zwischenspeicher-Netzwerk (40, 46) mit mindestens zwei Druckluft-Zwischenspeichern (40, 46); und
eine Steuereinheit (26); wobei
der Kompressor mit dem Druckluft-Vorratsbehälter verbunden und eingerichtet ist, den Druckluft-Vorratsbehälter mit Druckluft zu befüllen;
die Steuereinheit (26) eingerichtet ist, den Druck in den pneumatischen Aktoren (32) und den Druckluft-Zwischenspeichern (40, 46) zu überwachen; und
wenn eine durch den ersten pneumatischen Aktor (32) bereitgestellte erste Unterstützungskraft zu reduzieren ist, zu bestimmen, ob der erste pneumatische Aktor (32) in die Umgebung oder in das Druckluft-Zwischenspeicher-Netzwerk (40, 46) zu entlüften ist; und
wenn eine durch den zweiten pneumatischen Aktor bereitgestellte zweite Unterstützungskraft zu erhöhen ist, zu bestimmen, ob dem zweiten pneumatischen Aktor Druckluft aus dem Druckluft-Vorratsbehälter und/oder aus dem Druckluft-Zwischenspeicher-Netzwerk (40, 46) zuzuführen ist.

2. Exoskelett (10) nach Anspruch 1, wobei die Steuereinheit (26) eingerichtet ist, wenn eine erste Unterstützungskraft zu reduzieren und gleichzeitig die zweite Unterstützungskraft zu erhöhen ist, zu bewirken, dass Druckluft vom ersten pneumatischen Aktor (32) über das Druckluft-Zwischenspeicher-Netzwerk (40, 46) dem zweiten pneumatischen Aktor zugeführt wird, wenn eine zu entlüftende Druckkammer (30) des ersten pneumatischen Aktors (32) unter größerem Druck steht, als eine zu speisende Druckkammer des zweiten pneumatischen Aktors.

## Claims

1. Exoskeleton (10) comprising:
a plurality of exoskeleton elements (12, 12a, 12b);
a compressor;
a compressed air storage container;
a first pneumatic actuator (32);
a second pneumatic actuator;
a compressed air intermediate storage tank network (40, 46) having at least two compressed air intermediate storage tanks (40, 46); and
a controller (26); wherein
the compressor is connected to the compressed air storage container and is configured to fill the compressed air storage container with compressed air;
the controller (26) is configured to monitor the pressure in the pneumatic actuators (32) and the compressed air intermediate storage tanks (40, 46); and,
when a first support force provided by the first pneumatic actuator (32) is to be reduced, to determine whether the first pneumatic actuator (32) is to be vented to the environment or to the compressed air intermediate storage tank network (40, 46); and,
when a second support force provided by the second pneumatic actuator is to be increased, to determine whether compressed air is to be supplied to the second pneumatic actuator from the compressed air storage container and/or from the compressed air intermediate storage tank network (40, 46).

2. Exoskeleton (10) according to claim 1, wherein the controller (26) is configured, when a first support force is to be reduced and at the same time the second support force is to be increased, to cause compressed air from the first pneumatic actuator (32) to be supplied to the second pneumatic actuator via the compressed air intermediate storage tank network (40, 46), when a pressure chamber (30) of the first pneumatic actuator (32) to be vented is under greater pressure than a pressure chamber of the second pneumatic actuator to be supplied.

## Revendications

1. Exosquelette (10), comprenant :
une pluralité d'éléments d'exosquelette (12, 12a, 12b) ;
un compresseur ;
un réservoir de stockage d'air comprimé ;
un premier actionneur pneumatique (32) ;
un second actionneur pneumatique ;
un réseau d'accumulateurs intermédiaires d'air comprimé (40, 46) avec au moins deux accumulateurs intermédiaires d'air comprimé (40, 46) ; et
un dispositif de commande (26) ; dans lequel
le compresseur est relié au réservoir de stockage d'air comprimé et conçu pour remplir le réservoir de stockage d'air comprimé avec de l'air comprimé ;
le dispositif de commande (26) est conçu pour surveiller la pression dans l'actionneur pneumatique (32) et les accumulateurs intermédiaires d'air comprimé (40, 46) ; et
lorsqu'une première force d'appui mise à disposition par le premier actionneur pneumatique (32) doit être réduite, pour déterminer si le premier actionneur pneumatique (32) doit être purgé dans l'environnement immédiat ou dans le réseau d'accumulateurs intermédiaires d'air comprimé (40, 46) ; et
lorsqu'une seconde force d'appui mise à disposition par le second actionneur pneumatique doit être augmentée, pour déterminer si de l'air comprimé doit être conduit au second actionneur pneumatique à partir du réservoir de stockage d'air comprimé et/ou à partir du réseau d'accumulateurs intermédiaires d'air comprimé (40, 46).

2. Exosquelette (10) selon la revendication 1, dans lequel le dispositif de commande (26) est conçu pour faire en sorte, lorsqu'une première force d'appui doit être réduite et en même temps lorsque la seconde force d'appui doit être augmentée, que de l'air comprimé soit conduit du premier actionneur pneumatique (32) vers le second actionneur pneumatique par le biais du réseau d'accumulateurs intermédiaires d'air comprimé (40, 46) lorsqu'une chambre de pression (30) à purger du premier actionneur pneumatique (32) est soumise à une pression supérieure à celle d'une chambre de pression à alimenter du second actionneur pneumatique.
